# EUROPEAN PATENT APPLICATION

(11) **EP 1 405 868 A1**
(43) Date of publication of application: **07.04.2004**
(21) Application number: 02022447.3
(22) Date of filing: 04.10.2002
(51) Int. Cl.: C08G 18/64, C09D 5/44

(54) **Process for the preparation of thermo-curable resins**

(71) Applicant: Research Institute of Petroleum Industry of NIOC, Teheran (IR)
(72) Inventor: Taleban, Hossein, Dr., 1969733335 Teheran (IR)
(74) Representative: Kinzebach, Werner, Dr.

(57) **Abstract**

The present invention relates to a process for the preparation of a thermo-curable resin which can be dispersed in water after protonation, which process comprises:
i. reacting at least one mono- or polyhydric phenol PH with at least 0.3 mol, per mol of PH, of a primary amine, and optionally with one or more secondary amines in the presence of formaldehyde or a formaldehyde equivalent to obtain an aminoalkylation product AP;
ii. reacting the aminoalkylation product AP, with an epoxide compound BE having an epoxide equivalent mass of from 180 to 1000, provided that the molar ratio of epoxy groups in BE to primary amine, employed in the preparation of AP is at least 1:1,
iii.reacting the product obtained in step ii. with at least one monoepoxide compound ME, the amount of monoepoxide ME being at least 0.5 mol per mol of PH employed in step i, and
iv. reacting the product obtained in step iii. with at least one semi-blocked polyisocyanate compound which contains an unblocked isocyanate group.

The invention relates also to electrodepositon paints which contain the thermocurable resin as a binder. The invention relates also to the use of water soluble or water disperable resins A having from 0.2 to 1 mol of quarternary ammonium hydroxide groups per kg of resin A for controlling the pH of an aqueous electrodeposition bath during the cathodic electrodeposition of the protonated form of a thermo-curable resin B having tertiary aminogroups, which is dispersed in the aqueous electrodeposition bath.

## Description

The present invention relates to a process for the preparation of a thermo-curable resins which can be dispersed in water after protonation. The invention also relates to the thermo-curable resins obtained from this process and the use of these resins as binders in cathodic electrodeposition paints.

Electrodeposition paints are aqueous dispersions of charged organic polymer particles which are used to apply organic coatings to electrically conducting substrates by passage of direct current. When direct current flows between two electrodes the charged particles of the polymer dispersion are deposited on one of the electrodes in a diffussion-controlled boundary layer. Coagulation and deposition of the charged particles occurs as result of the change in pH-value caused by the electrolysis of water. If the charge of the dispersion particles is positive, coagulation and deposition occurs at the cathode, because OH- is formed at the cathode which neutralizes the positive charge. Therefore, these electrodeposition paints are also referred as cathodic electrodeposition paints.

The deposited polymer particles consolidate due to electro-osmosis to a coherent film and rapidly produce a high electrical resistant coating that slows down further deposition. This behaviour results in a uniform coating on the electrode even on parts with complicated shapes such as automobile bodies.

The polymers used as binders in cathodic electrodeposition paints usually contain reactive groups which are capable of a cross-linking reaction with functional groups of complementary reactivity. Therefore the coating obtained from the electrodeposition of the resin particles can be cured at elevated temperatures, whereby a hard coating of high corrosion resistance is obtained. The functional groups of complementary reactivity might be provided either by deposition of resins containing both reactive groups and functional groups of complementary reactivity and/or by co-deposition of a cross-linker. Most preferred are resins, which contain reversibly blocked isocyanate groups. Under stoving conditions these groups are deprotected and react whith hydroxyl groups and/or primary or secondary amino groups, thereby forming urethane or urea linkages.

A problem associated with the thermo-curable resins containing reversibly blocked isocyanate groups is the requirement of high reaction temperatures in the production of these resins. Consequently, in conventional resins containing reversibly blocked diisocyanates groups the split-off temperature of the blocking group exceeds 140°C. Otherwise, undesirable gelling would occur during production of these resins. Therefore, these resins require high curing temperatures exceeding 170°C. High curing temperatures however are uneconomical and furthermore might lead to defects in the coatings.

Prior art EP-A 0209857 discloses a process for preparing thermo-curable resins containing reversibly blocked isocyanate groups which are useful as a binder in a cathodic electrodeposition paints. This process comprises:
a) reacting a Mannich base of a phenolic compound having secondary amomp groups with a semi-block diisocyanate, and
b) subsequently reacting the remaining phenolic hydroxyl groups of the product of step a) with a polyepoxid compound.

Although the coatings obtained from these binders have a good corrosion resistance and good adhesion to the metallic substrate. Nevertheless, the coating properties are not completely satisfactory.

US 4,086,292 discloses a process for preparing a thermo-curable resin which is useful as a binder in a cathodic electrodeposition paint. This process comprises the reaction of a Mannich base which is obtained from condensed phenols, secondary amines containing at least one hydroxyl group and formaldehyd, with an epoxy resin that carries blocked isocyanate groups. However, epoxy resins carrying blocked isocyanate groups must be obtained in a separate reaction. This makes the production of the resin complicated und thus increases the production costs. The coatings obtained from these resins are not completely satisfactory.

Therefore, it is an object of the present invention to provide a process which allows the one-pot preparation of a thermo-curable binder, which can be used as a binder in cathodic electrodeposition paints. The resin should be curable under smooth curing (stoving) conditions, i.e. at temperatures below 170°C, preferably below 160°C. The thermo-curable resin obtained from this process should provide coatings having good coating properties such as excellent adhesion to the metallic substrate, high mechanical strength, good flexibility and good corrosion resistance. Furthermore, it is desirable that electrodeposition paints containing these resins are stable against coagulation of the resin particles. The resins should also allow a good controlling of film thickness in the electrodeposition process.

It has surprisingly been found that a thermo-curable resin which is useful as a binder for cathodic electrodeposition paints and which can be cured at temperatures below 170°C is obtained by a process which comprises the following steps:
i. reacting at least one mono- or polyhydric phenol PH with at least 0.3 mol, per mol of PH, of a primary amine, and optionally with one or more secondary amines in the presence of formaldehyde or a formaldehyde equivalent, to obtain an aminoalkylation product AP;
ii. reacting the aminoalkylation product AP with an epoxide compound BE having an epoxide equivalent mass of from 180 to 1000, provided that the molar ratio of epoxy groups in BE to primary amine, employed in the preparation of AP is at least 1:1,
iii. reacting the product obtained in step ii. with at least one monoepoxide compound ME, the amount of monoepoxide ME being at least 0.5 mol per mol of PH employed in step i, and
iv. reacting the product obtained in step iii. with at least one semi-blocked polyisocyanate compound which contains an unblocked isocyanate group.

Thus, a first object of the present invention is a process for the preparation of a thermo-curable resin which can be dispersed in water after protonation which comprises steps i. to iv. as outlined above.

The thermo-curable resins obtained from this process are useful as binders in cathodic electrodeposition paints. Coatings obtained from these paints have good coating properties, especially a good adhesion to the metallic substrate, a high mechanical strength such as impact strength (according to ASTM-D 2794), a good flexibility and a excellent corrosion resistance. Moreover, aqueous dispersions of these resins are stable against coagulation.

Therefore, the present invention also relates to thermo-curable resins obtained from this process and to the use of these thermo-curable resins as binders in cathodic electrodeposition paints. The thermo-curable resin of the present invention (hereinafter referred to as thermo-curable resin) may be used as a binder alone or in combination with at least one further resin, which can be dispersed and/or dissolved in water and which contains at least two functional groups which are reactive towards isocyanate groups (hereinafter referred to as crosslinker or crosslinking resin). The further resin acts as cross-linker by reacting with the reversibly blocked isocyanate groups under curing (stoving) conditions. However, the thermo-curable resin can also be cured in the absence of a cross-linker since it contains both reversibly blocked isocyanate groups and hydroxyl groups, the latter reacting with the blocked isocyanate groups under stoving conditions.

According to the present invention aminoalkylation products AP of mono- or polyhydric phenoles PH are used as starting material. The aminoalkylation product AP, hereinafter also referred to as Mannich base AP, is prepared by reacting at least one mono- or polyhydric phenol PH with at least 0.3 mol, preferably at least 0.4 mol, e.g. 0.3 mole to 1 mol, especially 0.4 to 0.8 mol, per mole of PH of a primary amine, and optionally with one or more secondary amines in the presence of formaldehyde or a formaldehyde equivalent. The Mannich base AP thus obtained contains secondary amino groups in an amount corresponding to the amount of primary amine employed in the preparation of the Mannich base AP. The Mannich Base AP may also contain tertiary amino groups which result from the reaction of the optional secondary amines and/or from tertiary amino groups in the amines employed in the Mannich reaction. The amount of the optional secondary amine is chosen to provide a total amount of primary and secondary amines from 0.3 to 2.5 mol, preferably from 0.5 to 2 mol and especially from 0.8 to 1.5 mol per mol of polyhydric phenol PH. Preferably the total amount of amino groups is chosen to provide a thermo-curable resin having an amine number of at least 30 mg KOH per g resin.

The term primary amine refers to compounds having exactly one primary amino group. The primary amine may further comprise functional groups which are inert in a Mannich reaction, e.g. tertiary amino groups, alkoxy groups and hydroxyl groups. Preferred primary amines are selected from the group consisting of monoalkyl amines, hydroxyalkyl amines and dialkyaminoalkyl amines. Each alkyl group in the amines may comprise from 1 to 20, preferably from 2 to 10 and especially preferred from 2 to 4 carbon atoms which may be interrupted by non adjectent oxygen atoms. Examples of suitable primary amines are propyl amine, n-butyl amine, aminoethanol, 2-(C₁-C₄-alkoxy)ethyl amine, such as 2-methoxyethyl amine, 2-ethoxyethyl amine, 2-(hydroxy-C₁-C₄-alkoxy)ethyl amine such as 2-(hydroxyalkoxy)ethyl amine, and 2-(di-C₁-C₄-alkylamino)ethyl amine such as 2-dimethylaminoethyl amine, 2-diethylaminoethyl amine and 3-(di-C₁-C₄-alkylamino)propyl amine such as 3-dimethylaminopropyl amine and 3-diethylaminopropyl amine.

Secondary amines as referred herein are amino compounds which contain exactly one secondary amino group and optionally one or more further functional groups which are not reactive in a Mannich reaction such as hydroxy, alkoxy or tertiary amino. Examples of suitable secondary amines are di-C₁-C₁₀-alkyl amines such as diethyl amine, di-n-propyl amine, diisopropyl amine, dicyclohexyl amine, cyclic amines such as morpholine and piperidine, di-(hydroxy-C₁-C₄-alkyl) amines such as diethanol amine, etc.

It is a preferred embodiment of the present invention to use a Mannich base AP as a starting material in step ii. which is obtained by reacting 1 mol of at least one mono- or polyhydric phenol PH with at least 0.3 mol of a primary amine and at least 0.3 mol of one or more secondary amines in the presence of formaldehyde, provided that the total amount of primary and secondary amine does not exceed 2 mol, preferably 1.5 moles per mol of polyhydric phenol PH.

The formaldehyde or formaldehyde source used is preferably a solution of formaldehyde in alcohol, aqueous formaldehyde or para formaldehyde or mixture of these. The amount of formaldehyde to be employed for the preparation of AP is as a rule at least one mol per mol of the total amount of primary and secondary amine, but may be greater and is only limited by the acceptable residual formaldehyde content of the thermo-curable resin. Preferably, the amount of formaldehyde does not exceed 2 moles per mol of the total amount of primary and secondary amine.

The mono- or polyhydric phenol PH employed in the preparation of AP comprises preferably from 2 to 4 and especially exactly 2 phenolic hydroxyl groups. Examples of suitable phenolic compounds are phenol, mono-C₁-C₂₀-alkyl or di-C₁-C₂₀-alkyl phenoles containing at least two benzene rings each of which containing at least one, preferably exactly one hydroxyl group. In a preferred embodiment of the present invention an aminoalkylation product AP is employed in step ii. which is obtained from a dihydric phenolic compound of the formula I 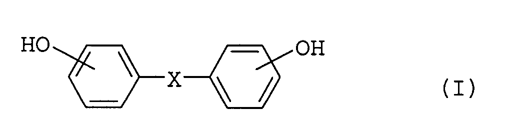 wherein X is selected from C₁-C₁₀ alkylene, S, O, SO, SO₂ or CH₂NRCH₂ with R being C₁-C₆ alkyl. Examples of suitable phenoles of the formula I are bis(4-hydroxyphenyl)methane, 2,2-bis(4-hydroxyphenyl)propane (= bisphenol-A), 1,1-bis(4-hydroxyphenyl)ethane, bis-(4-hydroxyphenyl)sulfone.

The reaction of the mono- or polyhydric phenol PH with the primary amine, optionally with the secondary amine in the presence of formaldehyde can be performed by conventional methods disclosed in the literature, cf., for example, Houben-Weyl, "Methoden der organischen Chemie", Vol. XI/1, page 731 ff. (1957), US 3,346,373, US 2,771,454, US 4,086,292 and US 4,134,932. The Mannich reaction to obtain the aminoalkylation product AP is peferably carried out by heating a batch containing the components in the presence of a solvent which forms an azeotrope with water such as toluene, and removing the water formed during the reaction by azeotropic destillation. After the calculated amount of water has been removed, the reaction product contains an average amount of secondary and optionally tertiary amino groups corresponding to the amount of primary and secondary amine employed in the reaction.

The Mannich Base AP might preferably be isolated or might be employed without isolation as a starting material in step ii.

The Mannich Base AP is reacted in step ii. with an epoxid compound BE having an epoxid equivalent mass (EEW) of from 180 to 1000, preferably of from 250 to 700. The epoxide equivalent mass (EEW) of a resin is understood as the amount of resin in g per mole of epoxy groups in the resin.

Preferred epoxide compounds BE are based on polyhydric phenolic compounds. Such compounds are obtained by reacting a phenolic compound with epichlorohydrin. These compounds are also referred to as glycidyl-ether of phenolic compounds or glycidyl-ether-based epoxy resins. They are well-known in the art (cf. J. Muskopf et al. in Epoxy Resins, Ullmann's encyclopedia of Industrial Chemistry, 5^{th} edition on CD-ROM, Chapter 2) and are commercially available unter the trademarks Epon, Epikote, Eponol, Eponex (Shell), Araldite, Aracast (Ciba-Geigy), Unox (Union Carbide), Sumi-epoxy (Sumitomo Chemical), Epomic (Mitsui Petrochemical Epoxy) etc. Examples of suitable glycidyl-ethers, which are based on phenolic compounds, are glycidylethers based on dihydric phenolic compounds often referred to as bisphenoles, phenol- and cresol-based epoxy novolacs, glycidyl-ethers of phenol aldehyde-adducts, glycidyl-ethers of phenol-hydrocarbon novolacs, furthermore aromatic glycidyl amines such as reaction product of p-aminophenol with 3 moles of epichlorhydrine and the reaction product of bis(4-aminophenyl)methane with 4 moles of epichlorhydrine. In a preferred embodiment of the present invention an epoxide compound BE is used in step ii. which is a glycidyl-ether based on a dihydric phenolic compound of the formula I as defined above, especially a glycidyl-ether based on Bisphenol A.

The amount of epoxide compound BE is preferably chosen to provide a molar ratio of epoxy groups in BE to secondary amino groups in AP (corresponding to the amount of primary amine) of at least 1,1:1 and preferably at least 1,5:1, e.g. of from 1,1:1 to 3:1 and especially in an amount from 1,5:1 to 2:1.

Usually step ii. is performed in an inert solvent, i. e. in the solvent employed for preparing the aminoalkylation product, which is usually a hydrocarbon solvent such as toluene or an aliphatic or cycloaliphatic solvent such as hexanes, cyclohexane, benzene, ethers, esters and ether-esters such as butyl cellosolve etc.

The reaction of step ii. is usually performed until most of the epoxy groups, peferably at least 95% of the epoxy groups have been reacted. Especially the reaction is performed to an epoxide value of practically zero.

The reaction temperature in step ii. usually varies from 50 to 150°C and preferably from 70 to 120°C.

The reaction product obtained in step ii. is then reacted with at least one mono epoxide compound ME (step iii.). The amount of ME is preferably at least 0.7 mol per mol of polyhydric phenol PH and especially from 0.7 to 1.5 moles per mole of PH employed in step i.. Preferably the total amount of epoxy groups in BE and ME equals the sum of secondary amino groups plus at least 50 %, preferably at least 70 % and especially at least 100 % of the phenolic hydroxyl groups in the Mannich base AP .

The reaction of step iii. is usually performed by adding the mono epoxide compound ME to the reaction product of step ii, when at least 95% of the epoxy groups of BE have been reacted. Preferably the reaction is performed until the epoxide value of the reaction mixture is practically zero. Examples of suitable mono epoxide compounds ME are glycidyl-ethers of aliphatic alcohols having at least 4 carbon atoms, especially from 4 to 20 carbon atoms, and glycidyl esters of aliphatic monocarboxylic acids having at least 5 carbon atoms, especially from 6 to 20 carbon atoms such as epoxyd esters of Koch acids, i.e. branched and preferably tertiary aliphatic acids. The latter are especially preferred.

The reaction temperature usually varies from 50 to 120°C and preferably from 70 to 110°C.

It has been found to be advantageous to keep the reaction mixture of step iii. at a temperature of at least 100°C, preferably from 100 to 130°C and especially from 110 to 125°C, until the viscosity of the reaction mixture reaches a minimum. The reduction of viscosity can easily be controlled by the electrical power which is necessary to keep the stirrer speed constant.

According to the present invention the product obtained in step iii. is then reacted with a semi-blocked polyisocyanate which contains at least one reactive isocyanate group and at least one reversibly blocked isocyanate group. Preferred semi-blocked polyisocyanates are semi-blocked diisocyanates and especially semi-blocked aromatic diisocyanates.

The amount of semi-blocked polyisocyanate is preferably chosen that at least 50% of the hydroxyl-groups, e.g. 50 to 99% especially at least 70% e.g. 70 to 90% of the hydroxyl groups of the product of step iii. are reacted with the free isocyanate groups of the semi-blocked polyisocyanate. The hydroxyl groups in the product of step iii. partially result from the reaction of the epoxy-groups with either the secondary amino groups or the phenolic hydroxyl groups. A further part of the hydroxyl groups correspond to the phenolic hydroxyl groups which have not reacted in step iii. A further part of hydroxyl groups might result from the compound BE, which usually contains secondary hydroxyl groups. Therefore, the total amount of hydroxyl groups in the product of step iii correspond to the total amount of secondary amino groups in the aminoalkylation product, phenolic hydroxyl groups and hydroxyl groups in the polyepoxide compound BE.

Suitable polyisocyanates are aromatic polyisocyanates, preferably aromatic diisocyanates, e. g., m- and p-phenylene diisocyanate, 4,4'-diphenylmethandiisocyanate, 2,4- and 2,6-toluylene diisocyanate, m-and p-xylylen diisocyanate, and aliphatic and alicyclic diisocyanates, e. g. hexamethylene diisocyanate and isophorone diisocyanate. Polyisocyanates having more than 2 isocyanate groups are dimerized and trimerized diisocyantes such as the cyanurates and biuretes of the above mentioned diisocyanates.

Conventional blocking agents are alcohols of 1 to 18 carbon atoms, which may be straight-chain, branched or cyclic, e. g. ethylhexanol, heptan-4-ol, tert.-butanol, cyclohexanol, oligomeric polyglycoles, C₁-C₄-alkylgylcoles, oximes, lactames and phenols. Preferred blocking agents are those which can be split-off at relatively low temperature, i. e. below 140°C, e. g. ketoximes such butanoneoxime, 2-(C₁-C₄-alkoxy)ethanol such as ethyleneglycole monomethylether, ethyleneglycole monobutylether and diethyleneglycole monoalkylethers such as diethyleneglycole monomethylether and diethyleneglycole monobutylether.

The semi-blocked polyisocyanates can be easily prepared in a known manner by reacting unblocked polyisocyantes with an amount of blocking agent sufficient for blocking a part but not all of the isocyanate groups of the polyisocyanate. In case of diisocyanates usually equimolar amounts of diisocyanate and blocking agent are used. In order to achieve a selective blocking of only one isocyanate group those diisocyanates are preferred wherein the first isocyanate group is attacked more rapidly than the second isocyanate group. Examples of diisocyanates having isocyanate groups of different reactivity are toluylene diisocyanate, xylylen diisocyanate and isophoron diisocyanate. Semi-blocked polyisocyantes obtained from these diisocyanates are thus preferred.

The product of step iii. is usually reacted with the semi-blocked polyisocyanate at temperatures which do not exceed 120°C, preferably from 50 to 100°C and especially preferred at from 60 to 90°C. The reaction is continued until virtually no further free isocyanate groups remain. The reaction is usually carried out by addition of the semi-blocked polyisocyanate to the reaction mixture of step iii. However, the reaction product of step iii. might be diluted before the addition of the semi-block diisocyanate with an inert solvent. Suitable inert solvents are e.g. the above mentioned hydrocarbon solvents such as xylene, toluene, aliphatic and cycloaliphatic hydrocarbons and ethers, ketones and ether-esters such as butylcellosolve. However, the dilution of the reaction product of step iii. is usually not necessary.

From the thus obtained reaction mixture the thermo-curable binder can be isolated by evaporating the volatile components such as solvent. However, isolation of the binder is usually not necessary since the thus obtained reaction mixture can be directly diluted with water after addition of an amount of acid sufficient to protonate at least a part of the amino groups in the thus obtained resin. Preferably the amount of acid is chosen to protonate at least 30% especially from 30% to 60% of the amino groups in the resin. Suitable acids are e. g. phosphoric acid and its derivatives, sulfuric acid and preferably water soluble carboxylic acids, especially formic acid, acetic acid or lactic acid.

In order to provide a suitable stability of the resin particles up on dilution with water it has been proven advantageous that the amine number of the resin is at least 30 mg KOH/g. Thus it is preferred to add at least 20 to 60 mmol of acid per 100 g of solid resin. The thus obtained protonated resin can be diluted with water to the desired concentration which may preferably range from 20 to 50% by weight of solid resin based on the total amount of the aqueous dispersion.

The thus obtained aqueous dispersion of the resin can be used as a binder in an electrodeposition process. The aqueous dispersion can be formulated as an electrodeposition paint by adding conventional additives, optionally pigments, extenters, cross-linkers and cross-linking catalysts if desired. Suitable additives are defoamers, preservatives, film forming aids, etc. A skilled person in the art of electrodepostion paints is familiar therewith.

In a preferred embodiment the thermo-curable, water dispersible resin of the invention is formulated with a resinous cross-linker, which also can be dispersed and/or dissolved in water upon protonation and which contains at least two functional groups per molecule, which are reactive toward the isocyanate groups of the thermo-curable resin of the invention. Suitable functional groups are primary and secondary amino groups and hydroxyl groups. The latter are preferred.

It is also preferred that the crosslinker contains protonated amino groups, preferably in amounts of from 0.2 to 1 mol per kg of crosslinker, which allow to disperse and/or dissolve the resinous cross-linker in water after protonation of the amino groups. Preferred crosslinkers comprise besides the reactive groups tertiary amino groups.

In an electrocoating process this resinous cross-linker is deposited together with the thermo-curable resin of the present invention on the cathode, thereby forming a part of the polymeric coating. Under stoving conditions the reactive groups of the cross-linker react with the isocyanate groups, thereby forming a polymeric coating of extraordinary mechanical stability and flexibility.

Suitable cross-linkers preferably contain aliphatic hydroxyl groups and/or primary or secondary aminogroups. Examples are amino resins, phenolic resins, epoxy resin-amine adducts Reversibly blocked isocyanates can also be used as crosslinker. Suitable crosslinkers are known from the art e.g. from the prior art cited herein.

In a preferred embodiment of the present invention the cross-linker is the reaction product of a polyepoxid compound, preferably a polyepoxid compound having an epoxide equivalent mass of from 180 to 1000, preferably of from 250 to 700, and secondary or tertiary amine, preferably a dialkanolamine such as diethanol amine. The amount of amine, preferably of dialkanolamine is usually chosen to provide equimolar amounts of amino groups and epoxy groups in the reaction mixture. Preferably the polyepoxide compound is chosen from compounds BE as defined above, especially from glycidyl-ethers based on polyhydric phenoles, in particular from glycidyl ethers based on dihydric phenoles of the formula I as mentioned above.

The relative amount of thermo-curable resin according to the present invention and resinous cross-linker is usually of from 10:1 to 1:2 preferably of from 5:1 to 1:1 and especially of from 3:1 to 1.5:1 (weight ratio) .

A further object of the present invention is the use of a water soluble or water-dispersible resin A having from 0.2 to 1 moles of quaternary ammonium hydroxide groups per kg of resin for controlling the pH of an aqueous electrodeposition bath in a process of the cathodic electrodeposition of the protonated form of a thermo-curable resin having tertiary amino groups.

As explained above the coagulation and deposition of the positively charged polymeric binder particles on the cathode occurs as result of the change in pH-value caused by hydroxide ions formed at the cathode by electrolysis of water during the electrodeposition process. The OH⁻ deprotonates the thermocurable resin and thus coagulation of the resin particles occur.

At the same time acid is liberated at the anode which builds up in the electrodeposition bath and which may leads to corrosion of the equipment and raises the conductivity of the bath making it more difficult to deposit smooth uniform coatings.

It has now been found that this problem could be overcome by the addition of resin A to the electrodeposition bath during the electrodeposition process, thereby keeping the pH of the electrodeposition bath constant or nearly constant.

This method can be applied to any cathodic electrodeposition paint wherein the binder is the protonated form of resin having tertiary amino groups. In a preferred embodiment of the invention this method is used to control the pH in an electrodeposition process wherein the resin to be deposited comprises a thermo-curable resin as defined above.

The chemical nature of the resin A is of minor importance. It is just required that the resin has quaternary hydroxide groups in an amount of from 0.2 to 1 mol per kg of resin, preferably from 0.2 to 0.8 mol per kg of resin and especially from 0.25 to 0.6 mol and especially preferred from 0.3 to 0.5 mol per kg of resin.

Resins having quaternary ammonium hydroxide groups can be easily prepared by methods known from the art. It is a preferred embodiment to use a resin which is obtained by reacting an epoxy group containing resin A1 with a tertiary amine A2 in the presence of water. This process is well-known in the art, e.g. from US 3839252 to Bosso and Wismer. This patent discloses quaternary ammonium salt group-containing resins, useful for electrodeposition, which in their neutral (basic) form can be used as resin A.

The resin A1 which contains at least one epoxy group may be chosen from any epoxy resin and preferably from a glycidyl-ether based on a polyphenol. The epoxide equivalent mass of A1 is preferably from 150 to 800.

In a preferred embodiment resin A1 additionally contains reversibly blocked isocyanate groups (resin A1'). These resins A1' are known from the literature. Preferably these resins contain urethanelinkages. They can be easily obtained by reacting an epoxy group containing resin which also contains hydroxyl groups with a semi-blocked polyisocyanate. Examples of suitable resins containing both epoxy groups and hydroxyl groups are the above mentioned compounds BE, in particular glycidylethers of polyhydric phenols, e.g. of dihydric phenoles of the formula I, since these glycidylethers usually contain several secondary OH-groups as a result of the reaction of epoxy groups with phenolic OH during the preparation of the glycidylethers. They are well known in the art and commercially available (see Muskopf et al. Ullmann's Encyclopedia of Industiral Chemistry 5^{th} Edition on CD-ROM, Epoxy Resins Chapter 2. Especially preferred are Glycidylethers based on dihydric phenoles, which have an epoxid equivalent mass of from 180 to 1000 especially of from 300 to 800.

The compound A2 can be any compound having a tertiary amino group such as trialkylamines, trialkanoleamines etc, wherein each alkyl group may contain from 1 to 20, preferably from 2 to 6 carbon atoms. The compound A2 may or may not contains further functional groups which are not reactive towards isocyanate groups.

In a preferred embodiment of the present invention the resin A is obtained by reacting the epoxy group containing resin A1 with a monomolecular compound A2', which contains at least one reversibly blocked isocyanate group and at least one tertiary amino group. This monomolecular compound A2' can be easily obtained by reacting a tertiary amine having an additional functional group, which is reactive towards isocyanate groups, with a semi-blocked polyisocyanate, preferably semi-blocked diisocyanate and especially a semi-blocked aromatic diisocyanate as described above. These monomolecular compounds A2 are well-known in the art, e. g. from EP-A 0209857 and US 5401782.

The monomolecular compound A2 is then reacted with the epoxid compound A1 in the presence of water, thereby forming a resin having the required amount of quaternary ammonium hydroxide groups.

In a particularly preferred embodiment of the present invention the resin A1 is obtained by reacting a polyepoxid-compound having already semi-blocked isocyanate groups (resin A1' with a tertiary amine that also contains semi-blocked isocyanate groups (compound A2'). By reacting A1' and A2' in the presence of water an ammonium hydroxide-containing resin is obtained which contains both quaternary ammonium hydroxide-groups and semi-blocked isocyanate groups.

Resins A, which are obtained from the reaction of A1' with A2' have been proven advantageous since the resin A is deposited during the electrodeposition process on the cathode, thereby forming a part of the coating.

The resin A containing quaternary ammonium hydroxid-groups can be either fed during the electrodeposition process into the electrodeposition bath or introduced in the electrodeposition bath before the electrodeposition is performed. Thereby the resin A neutralizes the acid liberated on the anode, thereby controlling the pH of the electrodeposition bath. The resin A can be fed in portions or continuously. Preferably the resin A is fed as a solution or dispersion in a water/solvent mixture.

According to the invention the thermo-curable resin optionally in combination with the cross-linker is used in the form of an aqueous dispersion during the electrodeposition process. As the term dispersion is believed to be a two-phase, transparent, translucent or opaque resinous system in which the resin is the dispersed phase and water is the continuous phase. The dispersed phase as well as the aqueous phase may comprise also solvents which result from the production of the resin. The average particle diameter of the resinous phase is generally less than 10 µm and preferably less than 5 µm.

The concentration of the resinous phase in the electrodeposition bath is usually at least 2 % by weight, preferably from 5 to 25 % by weight, and especially from 7 to 20 % by weight, based on the total weight of the electrodeposition bath.

As mentioned above, the aqueous medium may contain a coalescing solvent which either results from the production of the resins or which may be added as a coalescence. Useful solvents include hydrocarbons, alcohols, esters, ethers, ether-esters and ketones. Preferred coalescing solvents include alkanoles, polyoles, ether-esters and ketones. The amount of coalescing solvent is not unduly critical and is generally between 1 and 10 % by weight, preferably about 2 to about 7 % by weight.

The electrodeposition bath may also contain pigments and/or extenders of the conventional types used in electrodeposition processes, for example lead silicate, dibutyltin oxide, carbon black, titanium dioxide, kaolin, as well as colour pigments such as chromium yellow, cadmium red, etc . The relative amount of pigments+extenders to resin is usually expressed in the pigment to resin ratio which may be from 0.1:1 to 2:1, preferably from 0.2:1 to 1:1.5 and especially from 0.5:1 to 1:1.

Furthermore it has been found advantageous to incorporate into the electrodeposition paint a water soluble resin C which contains protonated amino-groups and reversibly blocked isocyanate groups. Such resins are known e.g. from US.Pat.5401782.

Preferred resins C are the reaction products of polyepoxide compounds containing both isocyanate groups and epoxy groups, e.g. a resin A1 as described above, with a primary, secondary or tertiary amine, preferably a compound A2 as described above. Resin C may be used in amount of from 1 to 30 % by weigth, preferably from 5 to 20 % by weigth, based on the total amount of thermo-curable resin and crosslinker.

For electrodeposition of the above mentioned resins the electrodeposition bath is placed in contact with an electrically conducting anode and an electrically conductive cathode with the surface to be coated being the cathode. Following contact with the aqueous dispersion a sufficient voltage is impressed between the electrodes. Thereby the binder components of the aqueous electrodeposition bath are deposited on the cathode thereby forming a coherent film. The applied voltage may be right and can be, for example, as low as 1 volt to as high as several thousands volt, but typically between 50 and 500 volts. The current density in the beginning of the process is usually between 0.1 ampere and 15 ampere per square foot and tend to decrease during the electrodeposition indicating the formation of an incylating coding on the cathode.

A resin according to the present invention can be applied to a variety of electroconductive substrates especially metals such as steel, aluminium, copper, magnesium and alike, but also including metallized plastic and conductive carbon coated material.

After the coding has been applied by electrodeposition, it is cured, usually baking at elevated temperatures ranging from 90 to 260° C for about 1 bis 30 minutes.

The following examples should illustrate the present invention and are not intended to limit the scope of the invention.

### Preparation Example 1: Preparation of a crosslinker

950 g of a diglycidylether based on bisphenol A (EEW about 475) is reacted at 80°C for 1 h with 2 moles of diethanolamine until an epoxy value of virtually zero was achieved, cooled and cut to 70% solid in toluene.

### Preparation Example 2: Preparation of toluenediisocyanate semi-blocked with 2-ethylhexanol:

A reaction vessel was charged with 174 parts of toluenediisocyanate and diluted with 33,9 parts of methyl isobutyl ketone and subsequently 0.2 parts of dibutyltin dilaurate as catalyst. After raising a temperature to 50°C, 131.5 parts of 2-ethylhexanol was added dropwise under dry nitrogen atmosphere and the mixture was agitated for 2. By cooling the reaction temperature was held at 50°C. As the result, a 2-ethylhexanol-half blocked toluenediisocyanate was obtained (solid content was 95% ).

### Preparation Example 3: Pigment grinding vehicle

a) 320 parts of 2-ethylhexanol half-capped toluene diisocyanate obtained from preparation example 2 (304 parts of solid) were added to 87,2 parts of dimethylethanolamine in a reaction vessel at room temperature. The mixture exothermed and was stirred for one hour at 80°C. 117.6 parts of aqueous lactic acid (75 % by weight) were then added followed by the addition of 39.2 parts of butyl cellosolve. The reaction mixture was stirred for about one hour at 65°C to form the quaternizing agent.
b) 710 parts of a glycidylether based on Bisphenol A (EEW 189, 96 % by weight, EPON 828, Shell) and 289,6 parts of Bisphenol A were charged under a nitrogen atmosphere to a suitable reaction vessel and heated to 150°-160°C whereby an exotherm reaction was initiated. The reaction mixture was permitted to exotherm for one hour followed by cooling to 120°C. Then 406. 4 parts of toluene diisocyanate half-capped with 2-ethylhexanol from preparation example 2 were added. The temperature of the reaction mixture was held at 110°C. for 1 h, followed by the addition of 56.7 parts of butyl cellosolve. The reaction mixture was then cooled to 85°C. homogenized and charged with water followed by the addition of the reaction product of step a). The temperature of the reaction mixture was held at 85°C. until an acid value of one was obtained.

### Preparation example 4: Preparation of an ammonium hydroxid-containing resin A

109 parts of a glycidylether based on Bisphenol A (EEW 189, 96 % by weight, EPON 828, Shell) and 45 parts of Bisphenol A were charged to a reaction vessel and heated for about one hour and 18 minutes until an exotherm reaction occurs, the highest temperature reaching 190°C. The reaction mixture was then cooled to 120°C, 62,5 parts of the reaction product of preparation example 2 were added. The reaction mixture was held at 120°C for 1 h. Then a first portion (97,4 parts) of butyl cellosolve was added and the mixture cooled to 85°C. The again 97,4 parts of butyl cellosolve, 30 parts of deionized water and 79,1 parts of the reaction product of preparation example 3a) were added and the reaction mixture held at 75°C. for 1 h followed by cooling to room temperature. The reaction mixture had a solids content of 57 percent, and contained 0.58 milliequivalents of total base per gram of resin solids and 0.453 milliequivalents of quaternary amonium base groups per gram of solids.

### Example 1: Preparation of a thermo curable resin according to the invention

228 parts of bisphenol A (1 mol) are heated to 70°C. with 65 parts of diethylaminopropylamine (0.5 mol), 36.5 parts of diethylamine (0.5 mol) and 100 parts of toluene in a suitable reaction vessel. 33 parts of para-formaldehyde, 91% strength (1 mol), are then added to the batch, while cooling gently. The temperature is increased slowly until a brisk azeotropic distillation is established. After removal of 21 parts of water of reaction, the mixture is cooled to 75°C.

Then 450 parts of toluene and 475 parts of a diepoxy resin based on bisphenol A and epichlorohydrin (Epoxid equivalent EEW 475) are added in portions in the course of 30 to 60 minutes. The batch is kept at 95°C until an epoxide value of zero is reached.

After addition of 250 parts (1 mol) of the glycidyl ester of a saturated, tertiary C₉-C₁₁-monocarboxylic acid (CARDURA® E10 by Shell), the reaction mixture is heated to 95 to 110°C until an epoxide value of practically zero is reached.

The temperature is then increased to 120°C. in the course of 30 minutes and kept at this level until the viscosity has reached a minimum, which is the case after about 30 to 60 minutes.

After cooling to 60°C., 1008 parts (3 mol) of toluene diisocyanate semi-blocked with diethylene glycol monobutyl ether are added continuously, during which the temperature is controlled so as not to exceed 90°c. After the end of the addition the batch is stirred at 80°C. for a further 40 minutes. The solids content of the obtained resin solution is about 80%.

### Example 2: Preparation of an aqueous dispersion of a thermo-curable composition

70 parts, based on 100% solids, of the thus obtained resin are mixed with 30 parts, based on 100% solids, of the resin of preparation example 1. The mixture is heated and stirred at 80°C. for 15 minutes. The solvent is then removed in vacuo, until a solids content of 95% is reached. After neutralization with about 40 millimol of formic acid per 100g of solid resin , the mixture is diluted with deionized water to a solids content of about 36%, while stirring.

### Example 3: Preparation of an electrodepositon paint:

### a) Dispersing agent:

A dispersing agent was prepared by mixing successively 120 parts of alkyl imidazoline (Geigy amine of Ciba Specialities), 120 parts of acetylenic alcohol (Surfynol 104 of Airproduct & Chemicals Inc.), 120 parts of 2- butoxyethanol, 221 parts of deionized water and 19 parts glacial acetic acid

### b) Pigment paste:

1000 parts of the aqueous dispersion of example 2 were mixed with 250 parts of the pigment grinding vehicle of preparation example 3 and 30 parts of the dispersing agent obtained in step a) to obtain a paste resin composition. To 250 parts of the thus obtained paste resin composition 150 parts of titanium dioxide, 26 parts of kaolin, 13 parts of carbon black and 12 parts of basic lead silicate were added succesivly to obtain a pigment paste.

### c) Catalyst paste

A catalyst paste was prepared by admixing 20.1 parts of the paste resin composition as descibed under 3 b) with 46 parts of deionized water and 28,3 parts of dibutyltin oxide.

### d) Electrodeposition paint:

The electrodeposition paint was obtained by admixing 400 parts of the aqueous resin composition of example 2, 0.4 parts of acetic acid, 100 parts of the pigment paste as described in 3 b) and 1 part of the catalyst paste as described in 3 c).

### Example 4: Process of cathodic electrodeposition:

50 parts of a 10 % by weight solution of acetic acid in water were added to the electrodeposition bath of Example 3 to simulate the build-up of acid. Thereby the pH decreased from an initial value of pH 6.25 to pH 5.3. Then 52 parts of the resin of preparation Example 4 were added. The pH raised to pH 6.0, indicating neutralization of the acid.

Zinc phosphated steel panels (1.5cm x 3.2cm x 2mm) were mounted in the thus obtained electrodeposition bath, the distance between the panels(anode and cathode) being about 5.5cm, Then a charge of 200 V was applied to the panels for 2 min. at a bath temperature of 27°C. The current dropped from an initial value of 18 mA to 6 mA. Thereby both the thermo-curable resin of example 1 as well as the resin of preparation example 4 deposited cathodically on the steel panel(cathode).

The thus obtained coating was cured at 158°C for 25 min.

### Example 5: Process of cathodic electrodeposition and determination of physical and chemical properties of cured films

The zinc phosphate pretreated steel panels were cathodically electrocoated in the electrodeposition bathes as described in example 3. The electrocoating process was performed as described for example 4 with varying pH, Resin Concentration and solvent concentration. The bath conditions are: pH 5.7 to 6.2, concentration of butylcellosolve 3 to 7 wt%, and resin concentration 7 to 10 wt%, a bath temperature of 25°C. The wet deposited films were cured by backing at 158°C for 20 to 30 min. The cured films were evaluated for adhesive strength, pendulum hardness, impact hardness, ductility (flexibility), salt-resistance, and alkali resistance and acid resistance.

All cured films showed excellent adhesive strength, good hardness and flexibility, and high salt-resistance and alkali-resistance.

**Table 1:**

| Bath | 1 | 2 | 3 | 4 | 5 | 6 | 7 |
|---|---|---|---|---|---|---|---|
| pH | 5.7 | 5.9 | 5.8 | 6.0 | 6.0 | 6.2 | 5.6 |
| BCS content [wt%]¹⁾ | 3.0 | 4.0 | 2.5 | 5.0 | 3.0 | 5.9 | 4.0 |
| Resin Concentration [wt%]²⁾ | 7.0 | 8.5 | 9.0 | 10.0 | 8.0 | 10.0 | 10.0 |
| Curing time [min] | 25 | 25 | 25 | 30 | 23 | 30 | 30 |

| Coating Properties: | | | | | | | |
|---|---|---|---|---|---|---|---|
| Adhesion³⁾ | GTO | GTO | GTO | GTO | GTO | GTO | GTO |
| Hardness⁴⁾ [sec] | 34 | 32 | 32 | 34 | 41 | 33 | 33 |
| Impact-strength⁵⁾ [kg.m] | 0.54 | 0.56 | 0.77 | 0.88 | 0.81 | 0.86 | 0.83 |
| Ductility⁶⁾ | 5.6 | 5.4 | 5.6 | 5.8 | 5.7 | 5.8 | 5.6 |
| Acid Resistance⁷⁾ | pass | pass | pass | pass | pass | pass | pass |
| Alkali Resistance⁸⁾ | pass | pass | pass | pass | pass | pass | pass |

| | | | | | | | |
|---|---|---|---|---|---|---|---|
| 1) Concentration of butylcellosolve in the electrodeposition bath in % by weight. | | | | | | | |
| 2) Concentration of resin in the electrodeposition bath in % by weight. | | | | | | | |
| 3) GtO0 indicates that the cut edges are completely smooth and no part of the coating has been chipped of. | | | | | | | |
| 4) Pendulum Hardness (according to König): The reference value is the damping period expressed as the time in seconds, which the pendulum requires to slow down from the initial value. The time will increase with increasing "hardness" of the coating to be tested. | | | | | | | |
| 5) Impact was measured according to ASTM-D 2794. Impact is the ability of the paint film to resist rupture from expansion when the metal substrate is deformed abruptly by an impact. A falling weight(1.81 Kg) is permitted to fall onto the painted side. The maximum distance of the falling weight is 1 meter. The minimum distance, at which rupture occurs is multiplied with the weight of the falling metal weight. | | | | | | | |
| 6) Ductility (flexibility) of coatings was determined similar to Erichsen indentation, by pressing a metal dent into the uncoated side of the metal panel. The value given in table 1 is the depth of the dent (mm) in the panel at which the coating tears of flakes. | | | | | | | |
| 7) Painted films were immersed in 5% hydrochloric acid solution for 168 h at room temp. | | | | | | | |
| 8) Painted films were immersed in 5% sodium hydroxide solution for 168 h at room temperature. | | | | | | | |

## Claims

1. A process for the preparation of a thermo-curable resin which can be dispersed in water after protonation, which process comprises:
i. reacting at least one mono- or polyhydric phenol PH with at least 0.3 mol, per mol of PH, of a primary amine, and optionally with one or more secondary amines in the presence of formaldehyde or a formaldehyde equivalent to obtain an aminoalkylation product AP;
ii. reacting the aminoalkylation product AP, with an epoxide compound BE having an epoxide equivalent of from 180 to 1000, provided that the molar ratio of epoxy groups in BE to primary amine, employed in the preparation of AP is at least 1:1,
iii. reacting the product obtained in step ii. with at least one monoepoxide compound ME, the amount of monoepoxide ME being at least 0.5 mol per mol of PH employed in step i, and
iv. reacting the product obtained in step iii. with at least one semi-blocked polyisocyanate compound which contains an unblocked isocyanate group.

2. The process as claimed in claim 1, wherein the total amount of primary and secondary amines is from 0.5 to 2 mol per mol of polyhydric phenol PH.

3. The process as claimed in any of the preceding claims, where the reaction mixture of step iii. is kept at a temperature of at least 100°C until the viscosity of the reaction mixture reaches a minimum.

4. The process as claimed in any of the preceding claims, wherein the polyhydric phenol PH is a dihydric phenolic compound of the formula I 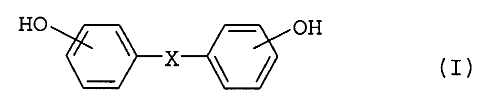 wherein X is selected from C₁-C₁₀ alkylene, S, O, SO, SO₂ or CH₂NRCH₂ with R being C₁-C₆ alkyl.

5. The process as claimed in any of the preceding claims, wherein the primary amine is selected from monoalkyl amines, hydroxyalkyl amines and dialkylaminoalkyl amines.

6. The process as claimed in any of the preceeding claims, wherein the epoxide compound BE is a glycidylether based on a dihydric phenolic compound of the formula I as defined in claim 4.

7. The process as claimed in any of the preceeding claims, wherein the monoepoxide is selected from glycidylethers of aliphatic alcohols having at least 4 carbon atoms and from glycidylesters of aliphatic monocarboxylic acids having at least 4 carbon atoms.

8. The process as claimed in any of the preceeding claims, wherein the semi blocked polyisocyanate is selected from semi-blocked aromatic diisocyanates.

9. The process as claimed in any of the preceeding claims, wherein the blocking group in the semi-blocked diisocyanate has a splitoff temperature of below 140°C.

10. The process as claimed in any of the preceeding claims, wherein the blocking group in the semi blocked diisocyanate is selected from primary aliphatic alcoxyalcanols, alcoxyalcoxyalcanols and aliphatic ketoximes.

11. A thermo-curable resin which can be dispersed in water after protonation, which is obtainable by a process as claimed in any of the claims 1 to 10.

12. A thermo-curable composition containing
a) a thermo-curable resin as claimed in claim 11 and
b) at least one further resin, which can be dispersed and/or dissolved in water and which has at least two functional groups being reactive towards isocyanate groups.

13. The use of a thermo-curable resin as claimed in claims 11 or of a thermo curable composition as claimed in claim 12 as a binder in a cathodic electrodeposition paint.

14. A cathodic electrodeposition paint comprising an aqueous dispersion of a polymeric binder, wherein the binder comprises:
a) a thermo-curable resin as claimed in claim 11 and optionally
b) at least one further resin, which can be dispersed and/or dissolved in water and which contains at least two functional groups being reactive towards isocyanate groups.

15. The use of water soluble or water disperable resins A having from 0,2 to 1 mole of quarternary ammonium hydroxide groups per kg of resin A for controlling the pH of an aqueous electrodeposition bath during the cathodic electrodeposition of the protonated form of a thermo-curable resin B having tertiary aminogroups, which is dispersed in the aqueous electrodeposition bath.

16. The use as claimed in claim 15, where the thermo-curable resin B is a resin as claimed in 11.

17. The use as claimed in any of claims 15 or 16, where the water soluble resin A is obtained by reacting an epoxy group containing resin A1 with a compound A2 having a tertiary amino group in the presence of water.

18. The use as claimed in claim 17, where the compound A2 contains at least one isocyanate group or one reversibly blocked isocyanate group and at least one tertiary amino group.

19. A process for electrocoating of a cathode, said process comprising the immersion of the cathode to be coated in an electrodeposition bath containing a coating vehicle which comprises the protonated form of a water insoluble thermo-curable resin B having tertiary aminogroups as an aqueous dispersion, and passing an electric current through the electrodeposition bath in order to deposit the coating vehicle on the cathode, said process being **characterised by** feeding a water soluble resin A having quarternary ammonium hydroxide groups to the electrodeposition bath.
